# DEMANDE DE BREVET EUROPEEN

(11) **EP 1 063 546 A1**
(43) Date de publication de la demande: **27.12.2000**
(21) Numéro de dépôt: 00401751.3
(22) Date de dépôt: 20.06.2000
(51) Int. Cl.: G02B 6/293, G02B 6/34, G02F 1/01

(54) **Procédé de stabilisation et d'accordabilité de la longueur d'onde de reseaux de bragg**

(30) Priorité: 22.06.1999 FR 9907933
(71) Demandeur: Highwave Optical Technologies S.A., 22300 Lannion (FR)
(72) Inventeur: Quetel, Lionel, 22300 Rostez (FR); Lablonde, Laurent, 22450 La Roche Derrien (FR); Botton, Claude, 22730 Trégastel (FR)
(74) Mandataire: Texier, Christian

(57) **Abrégé**

La présente invention concerne un dispositif comportant une fibre optique (110) où est photoinscrit un réseau de Bragg (112) caractérisé par le fait que la partie de fibre (110) comportant le réseau de Bragg (112) photoinscrit est fixée sur un élément actif ou un empilement d'éléments actifs (100) adapté pour compenser les effets de la température sur la longueur d'onde du réseau de Bragg (112).

## Description

La présente invention concerne le domaine des dispositifs exploitant un réseau de Bragg.

Ces dernières années, la réalisation de réseaux de Bragg s'est développée. Ces réseaux utilisés en réflexion ou en transmission sont introduits dans de nombreuses fonctions optiques telles que des lasers, des démultiplexeurs, des compensateurs de dispersion chromatique, des capteurs, etc.

Leurs utilisations dans certaines applications notamment dans le cadre du multiplexage dense en longueur d'onde ont fait apparaître certaines nécessités sur leurs caractéristiques.

Très vite la nécessité de stabiliser la longueur d'onde des réseaux de Bragg est apparue à l'homme de l'art.

En effet, la longueur d'onde des réseaux de Bragg classiques dépend fortement de la température.

La dépendance de la longueur d'onde de Bragg est typiquement égale à 1,1 nm pour 100°C. Elle peut dans certains cas perturber la fonction même des réseaux de Bragg. Elle est un obstacle pour leur implantation dans les systèmes de transmission optique commercialisés, qui typiquement doivent fonctionner sur une large gamme de température de -40°C à +80°C.

Par exemple, dans le cas d'un multiplexage en longueur d'onde, l'espacement entre les canaux de signal optique peut atteindre 0,8 voire 0,4 nm.

C'est pourquoi les filtres optiques doivent avoir une haute précision en longueur d'onde et une grande stabilité par rapport aux conditions extérieures.

Les compensateurs de dispersion chromatique utilisant des réseaux de Bragg dits « chirpés » doivent également avoir leur longueur d'onde centrale relativement constante par rapport à l'environnement extérieur, et ce pour maintenir leur performance.

Le réseau de Bragg peut aussi être intégré dans des capteurs de pression ou de contrainte mécanique.

Cet ensemble de contrainte nécessite de rendre athermique le réseau de Bragg c'est à dire de réduire sa dépendance à la température.

La dépendance en température est due à la fois au coefficient d'expansion thermique de la fibre et à son coefficient thermo-optique, notamment pour les fibres en silice dopée au germanium.

Différentes méthodes permettent de la réduire.

La première consiste à contrôler la température de la fibre en plaçant le réseau de Bragg dans une enceinte climatisée, ou en collant celui ci sur un élément à effet Peltier. Ces techniques permettent de maintenir le réseau à température constante.

Une seconde méthode consiste à utiliser un dispositif passif.

Une stabilisation passive de la dérive de la longueur d'onde de Bragg consiste à choisir un montage à dilatation mécanique différentielle ou un matériau à coefficient de dilatation négatif.

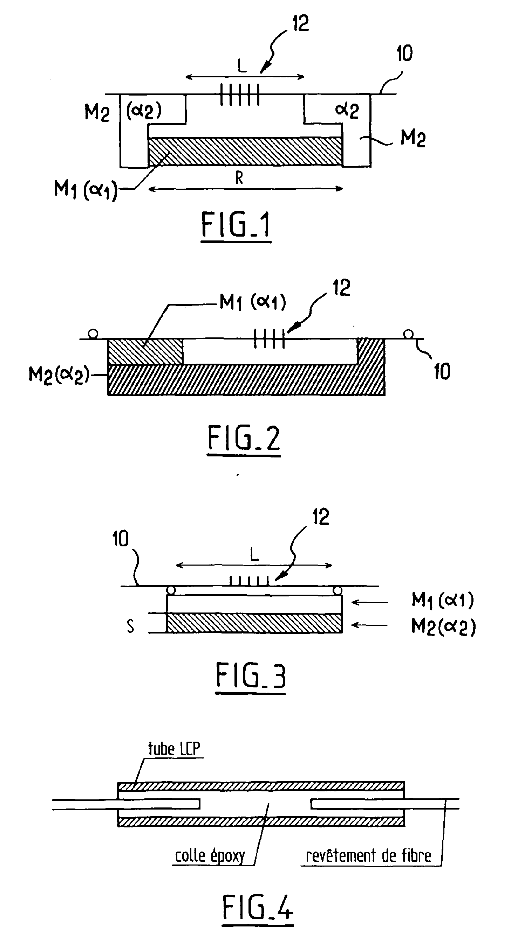

Le système de compensation connu, dont le principe est donné sur la figure 1 (dispositif "table top" décrit dans le document [1]), est formé de deux matériaux qui possèdent des coefficients de dilatation thermique différents: un barreau en matériau M₁(α₁) de longueur R, deux équerres en matériau M₂(α₂) vissées sur le matériau M₁, α₂≥α₁ , α₁>0.

La fibre optique 10, préalablement dénudée, est fixée en un point sur chaque équerre M₂, de façon à ce que le réseau de Bragg 12 se trouve au milieu de la distance L. Lors de cette fixation, une traction initiale est appliquée au réseau de Bragg, entraînant un léger décalage en longueur d'onde du réseau Δλ_{B}. Si la longueur d'onde du réseau non tendu est λ_{Bi}=1550nm, pour une traction équivalente à Δλ_{B}=+1nm, Δl/l est égale à environ 0,08%.

Un autre dispositif connu ("demi table top" décrit dans le document [2]) est schématisé sur la figure 2. Il permet d'obtenir des résultats similaires.

La figure 3 représente un autre dispositif connu type "plaque bimétallique" décrit dans le document [3]. Ce type de support contient deux barres métalliques de même longueur L, et de même épaisseur s, mais qui possèdent des coefficients de dilatation thermique différents α₁<α₂. Les barres sont fixées ensembles et forment un support unique. La fibre est collée aux extrémités du matériau qui se dilate le moins. Une traction initiale, entraînant un léger décalage en longueur d'onde, est imposée au réseau de Bragg. Lorsque la température augmente, les lames métalliques se courbent du même côté, avec la concavité du coté du matériau M₁(α₁) possédant le plus faible coefficient de dilatation thermique. Les deux points distants de L, qui fixent la fibre sur le matériau, se rapprochent. Ainsi l'allongement initial appliqué sur le réseau va diminuer, entraînant la diminution de la longueur d'onde de Bragg λ_{B} du réseau

Un autre procédé connu consiste à fixer un réseau de Bragg sur un tube de polymère cristallin liquide (comme illustré sur la figure 4). Cette technique est simple, applicable aux réseaux longs de plusieurs dizaines de millimètres. Il est connu que la dépendance en température, peut être réduite en maintenant la fibre sur un polymère dont le coefficient de dilatation thermique est négatif. On se reportera par exemple sur ce point aux documents [4, 5]. Cette technique a été utilisée sur les réseaux de Bragg photo-inscrits dans les fibres optiques. Une diminution du décalage en température de la longueur d'onde a été obtenue.

Cependant les dispositif connus visant à stabiliser la longueur d'onde des réseaux de Bragg ne donnent pas totalement satisfaction.

Les techniques utilisant un dispositif actif permettant de maintenir la température des réseaux de Bragg constante nécessitent une forte consommation d'énergie ou sont volumineux.

Les techniques utilisant des dispositifs passifs possédent également plusieurs inconvénients.

Les dispositifs table top et demi-table top illustrés sur les figures 1 et 2 rallongent de façon notable la longueur du dispositif. En effet, les matériaux sur lesquels sont fixées les deux extrémités du réseau de Bragg 12 possèdent une certaine longueur rallongeant alors la longueur du dispositif (environ un facteur 2 dans le cas du dispositif table top). De plus, la jonction entre les deux matériaux (M1 et M2) s'avère très délicate car ces deux matériaux n'ont pas les mêmes coefficients de dilatation.

Les dispositifs "à plaque bimétallique" illustrés sur la figure 3 présentent le même inconvénient que précédemment. En effet, les deux matériaux possèdent un coefficient de dilatation différent. Il est donc délicat de garantir un collage parfait dans la gamme de température -40°C à + 80°C.

Les dispositifs utilisant un tube polymère cristallin illustrés sur la figure 4, n'ont pour l'instant réduit la dépendance en température que d'un facteur 10 : typiquement 0,13 nm/100°C.

Pour certaines applications il est également apparu souhaitable de permettre un accord de la longueur d'onde des réseaux de Bragg.

Dans les systèmes dits DWDM (Dense Wavelength Division Multiplexing), il est souvent nécessaire de pouvoir accorder sur une petite plage spectrale (typiquement de l'ordre du nanomètre) la longueur d'onde du réseau de Bragg. En effet, dans le cas d'un multiplexage ou d'un démultiplexage en longueur d'onde ou l'espacement entre les canaux de signal optique peut atteindre 0,8 ou 0,4 nm il est important de pouvoir accorder la longueur d'onde de Bragg des réseaux afin d'insérer ou d'extraire un canal optique. On se reportera sur ce point au document [6]. La plage spectrale nécessaire d'accordabilité correspond au déplacement de la longueur d'onde de Bragg et correspond à un canal optique jusqu'à la longueur d'onde supérieure ou inférieure placée entre deux canaux optiques (par exemple 0,4 nm dans le cas d'un espacement entre canaux de 0,8 nm).

Plusieurs méthodes ont été présentées dans la littérature scientifique pour rendre accordable la longueur d'onde de Bragg des réseaux.

Deux propriétés sont à la base du principe :

La première est la dépendance de la longueur d'onde de Bragg avec la température (citée précédemment). Il suffit donc de modifier la température pour changer la longueur d'onde de Bragg.

La deuxième est la dépendance de la longueur d'onde de Bragg à une élongation ou compression. Lorsqu'une force est appliquée longitudinalement sur une fibre optique, la fibre de longueur L subit un allongement ou une compression deltaL en raison de son élasticité. L'indice des matériaux constituant la fibre se trouve modifié par effet photo-élastique. Un allongement de la fibre provoque ainsi une augmentation de la longueur d'onde tandis qu'une compression provoque une diminution de celle ci.

Une fibre optique dans laquelle un réseau de Bragg a été inscrit peut supporter une élongation de 1% et une compression de 10%. Différents laboratoires ont conçu des dispositifs permettant de comprimer ou d'étirer un réseau de Bragg (voir par exemple document [7]) en plaçant par exemple le réseau de Bragg dans une férule.

Afin de rendre la longueur d'onde de Bragg accordable sur une petite plage spectrale (quelques nm), une solution consiste à coller le réseau sur un empilement d'éléments actifs tels que des empilements piézo-électriques. Une tension électrique appliquée à l'empilement crée une élongation du réseau. Sa longueur d'onde de Bragg se déplace vers les grandes longueurs d'onde. On pourra se reporter sur ce point au document [6].

Cependant à la connaissance des inventeurs, aujourd'hui aucun dispositif satisfaisant n'a encore été proposé pour permettre à la fois un accord et une stabilisation en longueur d'onde des réseaux de Bragg.

Une solution consisterait à placer le réseau de Bragg dans un dispositif permettant de modifier la température de la fibre puis de stabiliser cette température, par exemple en plaçant le réseau de Bragg sur un élément à effet Peltier capable de réguler la température de la fibre. Cependant comme précédemment remarqué, cette méthode engendrerait une forte consommation d'énergie.

Au vu de l'état de la technique ainsi connu, la présente invention a pour but de proposer de nouveaux moyens permettant d'obtenir à la fois un accord et une stabilisation, dans des conditions acceptables, de la longueur d'onde d'un réseau de Bragg.

Le but est atteint dans le cadre de la présente invention grâce à un dispositif comportant une partie de fibre où est photoinscrit le réseau de Bragg fixée sur un élément actif ou sur un empilement d'éléments actifs dont les propriétés thermiques permettent une indépendance de la longueur d'onde de Bragg à la température.

Dans le cadre de la présente invention on appelle "élément actif' tout type de matériau ou d'empilement de matériaux dont les propriétés géométriques peuvent être modifiées sous l'effet d'une tension, d'un champ électrique ou d'un champ magnétique.

De préférence le dispositif n'utilise qu'un seul matériau (par exemple céramique) sur lequel est fixé le réseau.

Ce dispositif peut être appliqué sur tout type de réseau de Bragg photoinscrit sur une fibre optique.

La longueur d'onde varie alors de façon linéaire en fonction du signal de commande, par exemple de la tension, appliqué à l'élément actif ou à l'empilement.

Les résultats obtenus montrent que le dispositif conforme à la présente invention permet d'améliorer d'au moins un facteur 20, la dépendance de la longueur d'onde de Bragg en fonction de la température.

D'autres caractéristiques, buts et avantages de la présente invention apparaîtront à la lecture de la description détaillée qui va suivre et en regard des dessins annexés, donnés à titre d'exemple non limitatif et sur lesquels :
- les figures 1 à 4 précédemment décrites illustrent schématiquement 4 structures connues pour la stabilisation de la longueur d'ordre d'un réseau de Bragg.,
- le figure 5 représente un dispositif conforme à la présente invention,
- la figure 6 représente la variation de la longueur d'onde de Bragg en fonction de la tension appliquée à un empilement piézo-électrique, selon la présente invention,
- la figure 7 représente la variation de la longueur d'onde de Bragg en fonction de la température (entre -20°C et +70°C) pour différentes tensions appliquées à l'empilement piézo-électrique, dans le cadre d'un dispositif conforme à la présente invention.

Comme on l'a indiqué précédemment le dispositif conforme à la présente invention comprend une fibre comportant un réseau de Bragg photoinscrit et dont la partie comportant ce réseau est fixée sur un élément actif ou un empilement d'éléments actifs adaptés pour compenser les effets de la température sur la longueur d'onde du réseau de Bragg.

Plus précisément les inventeurs ont déterminé que de préférence le matériau composant l'élément actif ou l'empilement d'éléments actifs possède un coefficient de dilatation globale de l'ordre - 7.2 10⁻⁶ /°*C*.

Le principe de compensation exploité dans le cadre de l'invention consiste à contrebalancer la dérive de la longueur d'onde de Bragg en réalisant un relâchement sur la traction de la fibre avec la température. Ce relâchement est dû d'une part au coefficient de dilatation thermique négatif du matériau (α_{*matériau*}) auquel s'ajoute d'autre part la dépendance en température de l'élongation de celui ci, donnée dont le coefficient peut s'appeler *α*_{*élongation*}*.* Afin qu'il y ait compensation, la somme des deux contributions doit vérifier la relation :
α_{*matériau*} + α_{*élongation*} = - 7.210⁻⁶ /°*C*.

L'invention concerne tous les matériaux actifs vérifiant cette relation et permettant par conséquent la compensation.

Ils peuvent être des matériaux naturels comme le quartz, des empilements de céramique piézo-électrique constitués par exemple d'un alliage de Plomb, de Zirconium et de Titane (couramment appelés PZT), ou de Barium, de Thalliul et d'Oxygène.

Il existe de plus différentes céramiques actives pouvant convenir à cette application. En effet les céramiques possédant un effet « électrostrictif » (élongation sous l'action d'un champ électrique) composées de Plomb, de Magnésium et de Niobate (couramment appelées PMN) présentent une dépendance de leur élongation à la température.

Les céramiques possédant des propriétés « magnétostrictives » (élongation sous l'action d'un champ magnétique) composées de Terbium, de Dysprosium et de Fer (couramment appelées Terfenol) voient aussi leur élongation modifiée en fonction de la température et peuvent être utilisées dans le cadre de la présente invention.

A titre d'exemple, les inventeurs ont testé entre autres un empilement piézo-électrique constitué de lames de céramique PZT. Celui ci présente un coefficient de dilatation thermique négatif voisin de α_{*matériau*} = -5.5 10⁻⁶ /°*C* sur la gamme de température -20°C- +120°C et un coefficient d'effet piézo inverse égal à α_{*élongation*} = - 1.7 10⁻⁶ /°*C*.

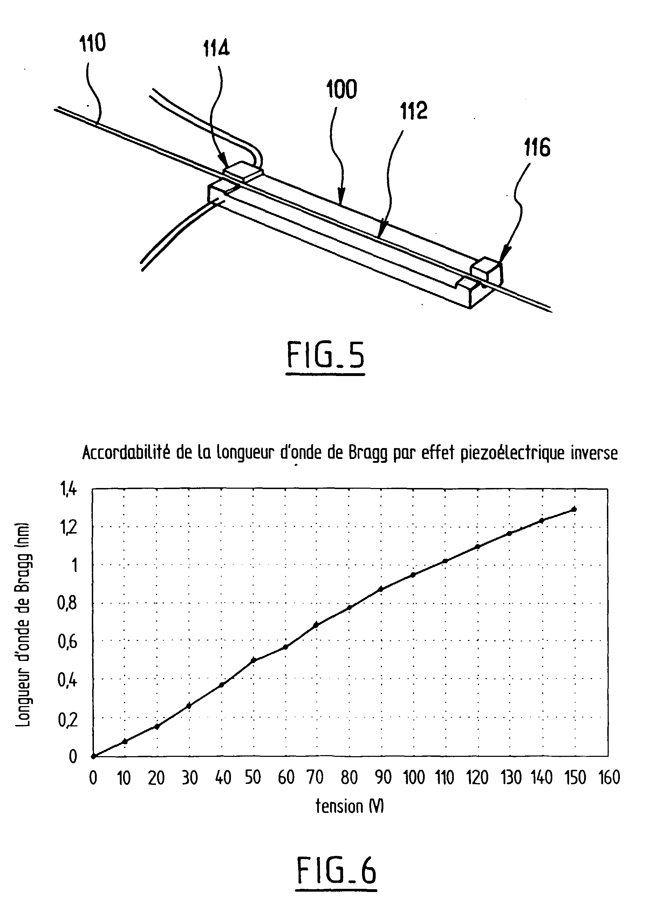

Une photographie de ce dispositif est représentée sur la figure 5. Le réseau de Bragg 112 est fixé à ses deux extrémités 114, 116 sur un empilement piézo-électrique 100. La fixation peut se faire par collage, soudure, ou fixation mécanique.

Un courant continue de faible ampérage (inférieur à 1mA) appliqué à l'empilement 100 va alors tendre la fibre permettant ainsi d'accorder la longueur d'onde du réseau de Bragg. De plus à partir d'une certaine tension, une stabilisation de la longueur d'onde de Bragg est obtenue. La fibre comporte un réseau de Bragg 112 d'environ 10 mm. Les 2 points de fixation 114, 116 de dimension d'environ 2 mm selon l'axe de la fibre 110 sont situés de part et d'autre du réseau de Bragg 112 et sont séparés d'environ 16 mm, soit à chaque extrémité de la céramique piezo-électrique 100.

Dans le cadre des essais réalisés sur le dispositif illustré sur la figure 5, la céramique piézo 100 utilisée possède des dimensions de : 18x5x5 mm.

La variation de la longueur d'onde de Bragg en fonction de la tension appliquée à l'empilement piézo-électrique 100 est représentée sur la figure 6.

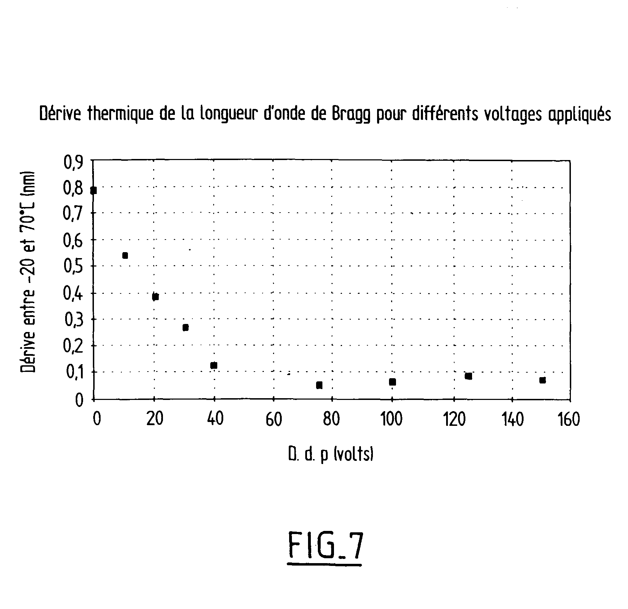

La figure 7 représente la variation de la longueur d'onde de Bragg du réseau 112 fixé sur l'empilement piézo-électrique 100 pour différentes tensions appliquées. Cette variation est mesurée entre -20°C et 70°C.

Pour une tension appliquée comprise entre 60 V et 150 V (soit 0,7 nm d'accordabilité), le réseau de Bragg 112 possède un comportement athermique. En effet la dépendance de la longueur d'onde à la température n'est plus que de 50 pm entre -20°C et 70°C. La dépendance en température de la longueur d'onde de Bragg a alors été réduite d'un facteur voisin de 20.

Bien entendu la présente invention n'est pas limitée au mode de réalisation particulier qui vient d'être décrit, mais s'étend à toutes variantes conformes à son esprit.

### BIBLIOGRAPHIE :

[1] V. FLEURY
   « Stabilisation thermique des réseaux de Bragg photoinscrits sur fibre optique » Rapport de Stage de DESS INGENERIE LASER à l'Université des Sciences et Technologies de Lille.
[2] J.Rioublanc et al.
   « Optimisation d'un système de stabilisation passive de la dérive en température de la longueur d'onde d'accord des Réseaux de Bragg » JNOG96, papier n°85.
[3] Pitassi S et al.
   « Fiber gratings :Temperature and mechanical sensitivity of narrow band transmission filters using different packaging solutions » Sirti S.p.A. Cables and Optical Technologies Italy.
[4] T.Iwashima et al.
   « Température compensation technique for fibre Bragg gratings using liquid crystalline polymer tubes » Electronics Letters Online No : 19970289.
[5] Jena^{ER} Glaswerk SCHOTT & Gen
   « Zerodur : In the sun of its properties, a unique glass ceramic ».
[6] Lionel QUETEL et al « programmable fiber grating based wavelength wavelength demultiplexer » OFC'96 Technical Digest P. 120-121.
[7] G. A. Bail et al « Compression-tuned single-frequency Bragg grating fiber laser » Opt. Lett. December 1994 Vol. 19 N°23 p. 1979-1981.

## Revendications

1. Dispositif comportant une fibre optique (110) où est photoinscrit un réseau de Bragg (112), caractérisé par le fait que la partie de fibre comportant le réseau de Bragg (112) photoinscrit est fixée sur un élément actif ou un empilement d'éléments actifs (100) adaptés pour compenser les effets de la température sur la longueur d'onde du réseau de Bragg (112).

2. Dispositif selon la revendication 1 caractérisé par le fait que le matériau composant l'élément actif ou l'empilement d'éléments actifs (100) possède un coefficient de dilatation globale (coefficient de dilatation thermique et coefficient de dépendance en température de l'élongation de l'ordre de -7,2.10⁻⁶ / °C

3. Dispositif selon la revendication 1 ou 2 caractérisé par le fait que l'élément actif ou l'empilement d'éléments actifs (100) est formé d'un matériau sensible à une tension électrique.

4. Dispositif selon la revendication 1 ou 2 caractérisé par le fait que l'élément actif ou l'empilement d'éléments actifs (100) est formé d'un matériau sensible à un champ électrique.

5. Dispositif selon la revendication 1 ou 2 caractérisé par le fait que l'élément actif ou l'empilement d'éléments actifs (100) est formé d'un matériau sensible à un champ magnétique.

6. Dispositif selon les revendications 1 à 5 caractérisé par le fait que l'élément actif ou l'empilement d'éléments actifs (100) est formé à base de céramique.

7. Dispositif selon les revendications 1 à 6 caractérisé par le fait que l'élément actif ou l'empilement d'éléments actifs (100) est formé à base de céramique à effet électrostrictif.

8. Dispositif selon les revendications 1 à 7 caractérisé par le fait que l'élément actif ou l'empilement d'éléments actifs (100) est formé de céramique à base de plomb, magnésium et/ou niobate.

9. Dispositif selon les revendications 1 à 6 caractérisé par le fait que l'élément actif ou l'empilement d'éléments actifs (100) est formé à base de céramique à effet magnétostrictif.

10. Dispositif selon les revendications 1 à 6 et 9 caractérisé par le fait que l'élément actif ou l'empilement d'éléments actifs (100) est formé de céramique à base de Terbium, Dysprosium et/ou de Fer.

11. Dispositif selon les revendications 1 à 6 caractérisé par le fait que l'élément actif ou l'empilement d'éléments actifs (100) est choisi dans le groupe comprenant : le quartz et les empilements de céramique piézo-électrique.

12. Dispositif selon la revendication 11 caractérisé par le fait que l'empilement de céramique piézo-électrique (100) est constitué d'un alliage de Plomb, de Zirconium et de Titane ou de Barium, de Thalliul et d'Oxygène.

13. Dispositif selon les revendications 1 à 6, 11 et 12 caractérisé par le fait que l'empilement d'éléments actifs (100) est formé d'un empilement de lames de céramique possédant un coefficient de dilatation thermique de l'ordre de -5,5.10⁻⁶ / °C.

14. Dispositif selon les revendications 1 à 13 caractérisé par le fait que le réseau de Bragg est fixé sur l'élément actif ou l'empilement d'éléments actifs par collage, soudure ou fixation mécanique.
